# EUROPÄISCHE PATENTANMELDUNG

(11) **EP 2 050 525 A1**
(43) Veröffentlichungstag der Anmeldung: **22.04.2009**
(21) Anmeldenummer: 08017350.3
(22) Anmeldetag: 02.10.2008
(51) Int. Cl.: B21J 15/02, F16B 19/05

(54) **Setzeinheit zum Setzen von Schließringbolzen**

(30) Priorität: 20.10.2007 DE 102007050248
(71) Anmelder: GESIPA Blindniettechnik GmbH, D-60528 Frankfurt/Main (DE)
(72) Erfinder: Wille, Lothar, 64564 Mörfelden-Walldorf (DE)
(74) Vertreter: Knoblauch, Andreas

(57) **Zusammenfassung**

Die Erfindung betrifft eine Setzeinheit (2) zum Setzen von Schließringbolzen (18), die ein Gehäuse (4) aufweist, in dem ein Greifbackengehäuse (5) mit Greifbacken (6) angeordnet ist.

Um ein einfaches Entfernen des abgerissenen Teils des Schließringbolzens zu ermöglichen, weist sie ein Öffnungselement (10) auf, das eine axiale Relativbewegung zwischen Greifbacken (6) und Greifbackengehäuse (5) hervorruft und so die Greifbacken (6) öffnet.

## Beschreibung

Die Erfindung betrifft eine Setzeinheit zum Setzen von Schließringbolzen, die ein Gehäuse aufweist, das ein Greifbackengehäuse umgibt, in dem mindestens zwei Greifbacken angeordnet sind, wobei an einer Stirnseite des Gehäuses ein Mundstück mit einer Öffnung angeordnet ist.

Schließringbolzen werden zum Verbinden von Bauteilen verwendet, bei denen eine hochfeste und vibrationssichere Verbindung erforderlich ist. Dabei wird ein Schließringbolzen von der Rück- oder Blindseite der Bauteile durch eine Öffnung geführt und von der Vorderseite der Bauteile ein Schließring auf den Schließringbolzen geschoben. Mit Hilfe eines Setzgeräts wird schließlich der Schließring verformt, so dass er eine formschlüssige Verbindung mit dem Schließringbolzen eingeht. Der Schließringbolzen weist dafür in der Regel Rillen auf, wobei der Schließring in diese Rillen hineingedrückt wird.

Der Setzvorgang läuft dabei folgendermaßen ab. Nachdem der Schließring über den Schließringbolzen geschoben worden ist, wird der Schließringbolzen in das Mundstück des Setzgeräts eingeführt. Dabei rutschen Halterillen des Schließringbolzens über die üblicherweise verwendeten Halterillen der Greifbacken, bis das Mundstück zur Anlage am Schließring kommt. Die Greifbacken sind dabei in der Regel im Greifbackengehäuse konisch gelagert, wobei sie durch eine Feder gegen die konische Lagerung gedrückt werden. Beim Einführen des Schließringbolzens ist daher ein Aufdrücken der Greifbacken gegen die Federkraft erforderlich.

Nachdem das Mundstück zur Anlage am Schließring gekommen ist, wird eine axiale Zugkraft erzeugt, die das Greifbackengehäuse gegenüber dem Gehäuse des Setzgeräts axial verschiebt. Aufgrund der konischen Lagerung der Greifbacken im Greifbackengehäuse werden die Greifbacken dabei zusammengedrückt und üben so eine radiale Haltekraft auf den Schließringbolzen aus, der dann zusammen mit dem Greifbacken und dem Greifbackengehäuse in das Gehäuse des Setzgeräts gezogen wird. Die axiale Zugkraft bewirkt dabei auch ein Hineinziehen des Schließrings in das Mundstück, der dadurch verformt wird. Das Mundstück ist dabei in Form, Länge und Kontur genau auf den Schließring abgestimmt. Durch die Verformung des Schließrings fließt dieser in die Rillen des Schließringbolzens, wodurch eine sehr sichere und unlösbare Verbindung zwischen Schließringbolzen und Schließring entsteht. Die Zugkraft liegt dabei während des gesamten Umformvorgangs am Schließringbolzen an, so dass die fertiggestellte Verbindung eine gewisse Vorspannung aufweist.

Nachdem der Schließring vollständig im Mundstück aufgenommen worden ist bzw. das Mundstück an einem Kragen des Mundstücks anliegt, ist die Verformung des Schließrings beendet. Aufgrund der daraufhin zunehmenden Zugkraft erfolgt ein Abriss des Schließringbolzens an einer Sollbruchstelle. Der abgerissene Teil des Schließringbolzens wird dabei weiterhin von den Greifbacken festgehalten. Der Schließring ist in der Regel im Mundstück verklemmt.

Üblicherweise wird der Schließring durch die im Anschluss an die Zugbewegung folgende Rückwärtsbewegung des Greifbackengehäuses aus dem Mundstück ausgestoßen. Die Rückwärtsbewegung wird dabei üblicherweise durch Federkraft erzeugt. Dabei kommt zunächst der abgerissene Teil des Schließringbolzens wieder in Kontakt mit dem im Schließring verbliebenen Teil des Schließringbolzens und wird weiter in das Gerät verschoben, bis die Stirnseite des Greifbackengehäuses am Schließring anliegt und dieses aus dem Mundstück drückt. Häufig ist dafür an der Stirnseite des Greifbackengehäuses ein Auswerfelement oder ein Fortsatz angeordnet. Der abgerissene Teil des Schließringbolzens verbleibt im Setzgerät, wobei er noch immer von den Greifbacken gehalten wird. Beim Einführen eines neuen Bolzens muss der abgerissene Teil an den Greifbacken vorbei und weiter in das Gerät gedrückt werden, wobei dabei die Haltekraft der Greifbacken überwunden werden muss. Zum Einführen eines neuen Schließringbolzens ist also eine gewisse Kraft notwendig, weshalb der neue Schließringbolzen von der Rückseite der Bauteile gesichert sein muss. Durch das Rutschen des Schließringbolzens über die Greifbacken verschleißen die Greifbacken relativ schnell. Dies ist insbesondere dann der Fall, wenn die Greifbacken Halterillen aufweisen, die eine sichere Kraftübertragung auf den Schließringbolzen sicherstellen sollen und in entsprechende Rillen am Schaft des Schließringbolzens eingreifen.

Es ist Aufgabe der vorliegenden Erfindung, ein einfaches Entfernen des abgerissenen Teils des Schließringbolzens zu ermöglichen.

Erfindungsgemäß wird diese Aufgabe bei einer Setzeinheit der eingangs genannten Art dadurch gelöst, dass sie ein Öffnungselement aufweist, das eine axiale Bewegung der Greifbacken in eine Richtung begrenzt, wobei das Greifbackengehäuse weiter in diese Richtung bewegbar ist.

Dadurch wird eine axiale Relativbewegung zwischen den Greifbacken und dem Greifbackengehäuse hervorgerufen, was aufgrund der konischen Lagerung der Greifbacken im Greifbackengehäuse zu einer radialen Aufweitung der Greifbacken führt. So ist also ein gezieltes Öffnen der Greifbacken möglich. Durch die axiale Relativbewegung zwischen Greifbacken und Greifbackengehäuse kann somit der in der Setzeinheit verbliebene abgerissene Teil des Schließringbolzens freigegeben werden und ohne großen Kraftaufwand entfernt werden. Dadurch ist auch ein automatisches Entfernen beispielsweise durch Vakuum-Absaugen möglich. Auch das Einführen eines neuen Schließringbolzens wird stark vereinfacht, da dieser beim Einführen nicht erst die Greifbacken auseinanderdrücken muss. Auf ein Festhalten des Schließringbolzens von der Rückseite der Bauteile, wofür in der Regel eine zweite Person benötigt wird, kann dadurch verzichtet werden.

Dabei ist besonders bevorzugt, dass das Öffnungselement mindestens einen Fortsatz aufweist, der durch eine Öffnung im Greifbackengehäuse ragt. Sowohl das Greifbackengehäuse als auch die Greifbacken können also eine Relativbewegung zum Öffnungselement ausführen, das daher ortsfest im Gehäuse der Setzeinheit angeordnet werden kann. Sobald die Greifbacken mit dem Fortsatz in Kontakt kommen, ist eine weitere Bewegung der Greifbacken in Richtung zum Öffnungselement verhindert. Die Bewegung des Greifbackengehäuses wird dabei nicht gehemmt. Die Bewegungsrichtung, die durch das Öffnungselement begrenzt wird, entspricht z.B. der Richtung der Rückstellbewegung, bei der das Greifbackengehäuse mit den Greifbacken in Richtung zum Mundstück bewegt wird. Das Öffnungselement bewirkt also ein Öffnen der Greifbacken während der Rückstellbewegung.

Vorzugsweise ist der Fortsatz hülsenförmig ausgebildet und ein Schließringbolzen durch die Öffnung führbar. Der Fortsatz und der Schließringbolzen können so durch die gleiche Öffnung im Greifbackengehäuse ragen, wobei der Schließringbolzen vom hülsenförmigen Fortsatz ebenfalls umgeben und gegebenenfalls geführt wird. Zusätzliche Öffnungen im Greifbackengehäuse werden nicht benötigt.

Bevorzugterweise umgeben die Greifbacken einen Innenraum, wobei sie an ihrer Innenseite Halterillen aufweisen. Der Innenraum dient dabei zur Aufnahme des Schließringbolzens, der durch das Mundstück und die Öffnung im Greifbackengehäuse eingeführt werden kann. Durch die an ihrer Innenseite angeordneten Halterillen können die Greifbacken große Kräfte auf den Schließringbolzen übertragen und diesen sicher halten.

Bevorzugterweise setzt sich der Innenraum durch die Setzeinheit fort. Dadurch ist es möglich, den abgerissenen Teil des Schließringbolzens aus der vom Mundstück abgewandten Seite des Gehäuses der Setzeinheit herauszunehmen. Es ist dabei denkbar, dass die Setzeinheit mit einer Vakuumeinheit verbunden wird, die den abgerissenen Teil des Schließringbolzens durch den Innenraum ansaugt und so den abgerissenen Teil automatisch entfernt.

Vorzugsweise weist die Setzeinheit einen Auswerfer auf, der zwischen dem Öffnungselement und der Öffnung des Mundstücks angeordnet ist. Dieser Auswerfer dient dazu, nach abgeschlossenem Setzvorgang den Schließring aus dem Mundstück auszustoßen. Dabei wird über den Auswerfer eine Rückstellkraft vom Greifbackengehäuse auf den Schließring übertragen, die schließlich zum Ausstoßen des Schließrings aus dem Mundstück führt. Die Ausbildung des Greifbackengehäuses kann dadurch relativ einfach gehalten werden, da dieses keinen entsprechenden Auswerfmechanismus aufweisen muss.

Dabei ist besonders bevorzugt, dass der Auswerfer einen Fortsatz aufweist, der sich in die Öffnung des Mundstücks erstreckt und eine Länge aufweist, die mindestens einer Tiefe der Öffnung entspricht. Der Fortsatz des Auswerfers kann die Öffnung des Mundstücks also vollständig durchdringen. Dadurch ist sichergestellt, dass der Auswerfer den Schließring vollständig aus dem Mundstück ausstoßen kann. Gleichzeitig wird gewährleistet, dass der Auswerfer bereits zum Beginn des Setzvorgangs am Schließring anliegt. Beim Ausstoßen kommt dadurch der Auswerfer gleichzeitig in Kontakt mit dem Schließring, wie der abgerissene Teil des Schließringbolzens mit dem Teil des Schließringbolzens, der im Schließring verbleibt. Ein Verschieben des abgerissenen Teils des Schließringbolzens während der Rückstellbewegung ist daher nicht notwendig. In dem Moment, in dem die Greifbacken den Schließringbolzen fest umgreifen, besteht möglichst noch kein Kontakt zwischen Mundstück und Schließring oder der Schließring ist gerade erst zur Anlage am Mundstück gekommen. Der Kontakt zwischen Greifbackengehäuse und Auswerfer bzw. Auswerfer und Schließring wird dann während des gesamten Zugvorgangs aufrecht erhalten.

Vorzugsweise ist der Fortsatz hülsenförmig und einstückig mit dem Auswerfer ausgebildet. Durch die hülsenförmige Ausführung des Fortsatzes kann dieser den Schließringbolzen umgeben und so als Führung dienen, wobei eine gute Kraftübertragung auf den Schließring gewährleistet ist. Durch die einstückige Ausbildung mit dem Auswerfer ist die Herstellung, beispielsweise als Spritzgussteil, relativ einfach und kostengünstig.

Bevorzugterweise weist der Auswerfer mindestens einen Zapfen auf, der sich durch mindestens eine Ausnehmung im Öffnungselement in Richtung des Greifbackengehäuses erstreckt. Dieser Zapfen sorgt dafür, dass der Auswerfer mit dem Greifbackengehäuse in Kontakt bringbar ist, ohne dass eine Beeinflussung durch das Öffnungselement erfolgt. Während eine Relativbewegung des Auswerfers im Gehäuse notwendig ist, kann das Öffnungselement fest im Gehäuse angeordnet sein. Die Relativbewegung zwischen Auswerfer und Öffnungselement wird dabei dadurch ermöglicht, dass der Zapfen durch die Ausnehmung im Öffnungselement ragt.

Bevorzugterweise weist der Auswerfer mehrere Zapfen auf, die als Kreissegmente ausgebildet sind, wobei die Zapfen einstückig mit dem Auswerfer ausgebildet sind. Die Zapfen dienen so gleichzeitig als Führungen des Auswerfers im Öffnungselement. Durch die Ausbildung der Zapfen als Kreissegmente ist dabei ein Verkanten des Auswerfers nahezu ausgeschlossen. Gleichzeitig können die Zapfen mit relativ viel Material ausgebildet werden, so dass eine gute Kraftübertragung möglich ist. Die einstückige Ausbildung der Zapfen mit dem Auswerfer gewährleistet dabei eine kostengünstige Herstellung.

Vorzugsweise weisen die Zapfen eine größere axiale Länge auf als der Fortsatz des Öffnungselements. Der Fortsatz des Öffnungselements soll nur für eine relativ kleine Relativbewegung zwischen den Greifbacken und dem Greifbackengehäuse sorgen, durch die ein sicheres Öffnen der Greifbacken gewährleistet ist. Der Auswerfer wird jedoch um eine größere Länge bewegt, die zumindest der axialen Erstreckung des Schließrings entspricht.

Dadurch, dass die Zapfen nun eine größere axiale Länge aufweisen als der Fortsatz des Öffnungselements, kann zumindest bis zum Abriss des Schließringbolzens ein Kontakt zwischen dem Greifbackengehäuse und dem Auswerfer bestehen. Dadurch wird gewährleistet, dass während der Rückstellbewegung der Schließring durch das Greifbackengehäuse über den Auswerfer aus dem Mundstück ausgedrückt werden kann, ohne dass der abgerissene Teil des Schließringbolzens innerhalb der Greifbacken verschoben werden muss.

Im Folgenden wird die Erfindung anhand eines bevorzugten Ausführungsbeispiels in Verbindung mit der Zeichnung näher beschrieben. Hierin zeigen:
- Fig. 1: ein Setzgerät mit angebrachter Setzeinheit zum Setzen von Schließringbolzen,
- Fig. 2: einen Querschnitt einer Setzeinheit vor einem Einbringen einer Zugkraft,
- Fig. 3: einen Querschnitt der Setzeinheit nach Beginn des Setzvorgangs,
- Fig. 4: einen Querschnitt der Setzeinheit nach Abschluss des Setzvorgangs und
- Fig. 5: eine Detailansicht des Auswerfers.

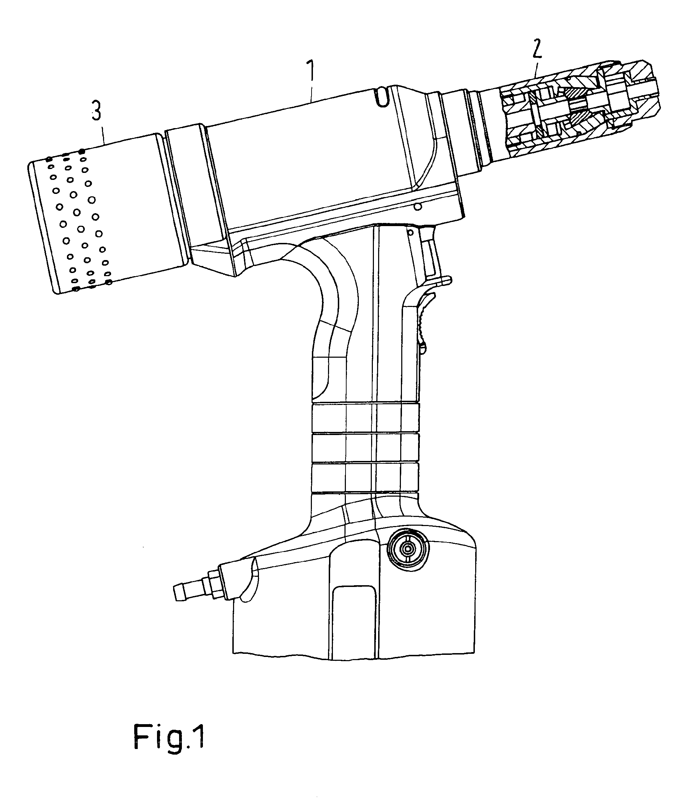

In Fig. 1 ist ein Setzgerät 1 mit einer erfindungsgemäßen Setzeinheit 2 dargestellt. Das Setzgerät 1 ist bei diesem Ausführungsbeispiel ein pneumatisch-hydraulisches Setzgerät. Die Setzeinheit 2 kann aber auch in Verbindung mit anderen Setzgeräten, wie beispielsweise elektrisch angetriebene Geräte oder handbetriebene Geräte und ähnliches, verwendet werden. Das Setzgerät 1 ist ferner mit einem Restdornbehälter 3 versehen, der zur Aufnahme der abgerissenen Teile der Schließringbolzen dient. Dazu wird der abgerissene Teil des Schließringbolzens mittels Vakuum angesaugt.

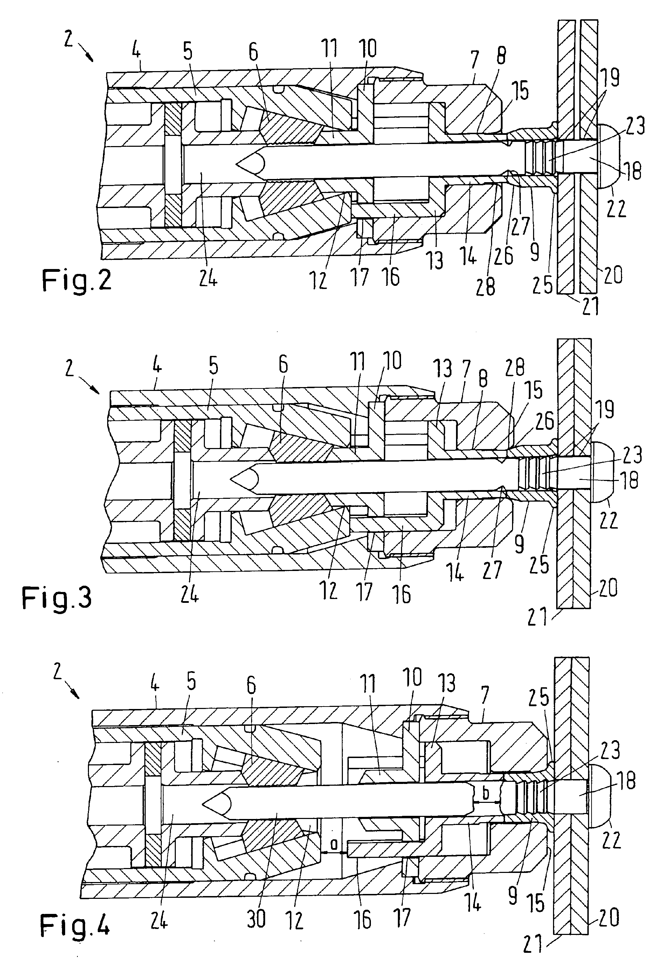

In Fig. 2 ist die Setzeinheit 2 in Schnittansicht dargestellt. Die Setzeinheit 2 weist ein Gehäuse 4 auf, in dem axial verschiebbar ein Greifbackengehäuse 5 angeordnet ist. Innerhalb des Greifbackengehäuses 5 sind drei Greifbacken 6 angeordnet. Es ist auch denkbar, eine andere Anzahl an Greifbacken zu verwenden, beispielsweise zwei bis sechs. Das Gehäuse 4 ist an einer Stirnseite mit einem Mundstück 7 verschlossen, das eine Öffnung 8 aufweist, die mit einer entsprechenden Kontur zum Umformen eines Schließrings 9 versehen ist. Die Greifbacken 6 sind im Greifbackengehäuse 5 axial verschiebbar und an ihrer dem Mundstück 7 zugewandten Seite im Greifbackengehäuse 5 konisch gelagert. Zwischen Greifbackengehäuse 5 und Mundstück 7 ist im Gehäuse 4 ein Öffnungselement 10 angeordnet. Das Öffnungselement 10 wird durch das Mundstück 7, das in das Gehäuse 4 eingeschraubt wird, gegen einen radialen Vorsprung im Gehäuse 4 gedrückt und so in seiner Lage fixiert.

Das Öffnungselement 10 weist einen hülsenförmigen Fortsatz 11 auf, der sich durch eine Öffnung 12 im Greifbackengehäuse 5 erstreckt. In der dargestellten Ausgangsposition stehen die Greifbacken 6 in Kontakt mit dem Fortsatz 11 des Öffnungselements 10. Die Greifbacken 6 können dabei z.B. durch eine nicht dargestellte Feder in Richtung des Mundstücks 7 belastet sein. Andere Rückstellmöglichkeiten sind denkbar. Zwischen Öffnungselement 10 und Mundstück 7 ist ein Auswerfer 13 angeordnet, der einen hülsenförmigen Fortsatz 14 aufweist, der sich durch die Öffnung 8 im Mundstück 7 erstreckt, wobei die Länge des Fortsatzes 14 größer ist als die Tiefe der Öffnung 8. Dadurch steht der Fortsatz 14 über eine Stirnseite 15 des Mundstücks 7 über, so dass der Fortsatz 14 beim Aufsetzen der Setzeinheit 2 als erstes in Kontakt mit dem Schließring 9 kommt. Der Auswerfer 13 weist ferner mehrere Zapfen 16 auf, die sich entgegengesetzt vom Fortsatz 14 erstrecken. Die Zapfen 16 ragen dabei durch Ausnehmungen 17 im Öffnungselement 10 und stehen in Kontakt mit dem Greifbackengehäuse 5.

Ein Schließringbolzen 18 ist durch eine Bohrung 19 in zwei zu verbindenden Bauteilen 20, 21 gesteckt worden, so dass ein Setzkopf 22 des Schließringbolzens 18 an einer Rückseite des Bauteils 20 anliegt. Der Schließring 9 ist bereits über den Schließringbolzen 18 geschoben und umgibt Rillen 23 des Schließringbolzens 18. Der Schließringbolzen 18 erstreckt sich dabei bis in einen Innenraum 24 der Setzeinheit 2. Der Innenraum 24 wird dabei u.a. durch die Öffnung 8 im Mundstück 7, der Öffnung 12 im Greifbackengehäuse 5 und dem Raum zwischen den Greifbacken 6 gebildet. Dabei setzt sich der Innenraum 24 aber weiter durch die Setzeinheit 2 fort, wobei er sich bis in den Restdornbehälter 3 erstreckt.

Der Schließring 9 weist an einem den Bauteilen 20, 21 zugewandten Ende einen umlaufenden Kragen 25 auf. Am gegenüberliegenden Ende ist der Schließring 9 mit einer Fase 26 versehen, die das Einführen in die Öffnung 8 erleichtern soll. Der Schließringbolzen 18 weist eine Sollbruchstelle 27 auf, wobei die Sollbruchstelle 27 derart positioniert ist, dass nach einem Bruch des Schließringbolzens 18 der im Schließring 9 verbleibende Teil des Schließringbolzens 18 in etwa mit dem Schließring 9 bündig abschließt.

In Fig. 3 ist nun eine Situation kurz nach dem Beginn des Zugvorgangs dargestellt. Nachdem die Greifbacken 6 den Schließringbolzen 18 gegriffen haben, führt eine weitere Zugbewegung des Greifbackengehäuses 5 dazu, dass die Bauteile 20, 21 gegen den Schließring 9 gedrückt werden. Dadurch wird der Schließring 9 durch die Öffnung 8 etwas in das Mundstück 7 eingeführt, was durch eine Fase 28 am Mundstück 7 erleichtert wird. Dabei wird durch den Schließring 9 der Auswerfer 13 axial in Richtung des Greifbackengehäuses 5 verschoben. Genauer gesagt bleiben der Schließring 9, der Auswerfer 13 und das Greifbackengehäuse 5 stationär, während das Gehäuse 4 mit Mundstück 7 über den Schließring 9 geschoben wird. Dadurch wird auch das Greifbackengehäuse 5 relativ zum Gehäuse 4 und den Greifbacken 6 in der Zeichnung nach links bewegt, wobei dadurch die Greifbacken 6 radial aufeinander zu bewegt werden und den Schließringbolzen 18 umfassen. Die Greifbacken 6 weisen dabei Halterillen 29 auf, die ein sicheres Halten des Schließringbolzens 18 gewährleisten.

Durch einen Setzmechanismus wird das Greifbackengehäuse 5 zusammen mit den Greifbacken 6 und dem Schließringbolzen 18 relativ zum Gehäuse 4 in der Zeichnung nach links, also vom Mundstück 7 weg, gezogen. Der Kraftfluss wird dabei durch das Gehäuse 4 wieder geschlossen, das diese Kraft über das Mundstück 7, den Schließring 9 und schließlich auf die Bauteile 20, 21 überträgt. Durch die Bewegung des Greifbackengehäuses 5 werden zunächst die Greifbacken 6 fest gegen den Schließringbolzen 18 gedrückt, wobei sich dabei die Halterillen 29 in den Schließringbolzen 18 eingraben können. Anschließend werden die Greifbacken 6 zusammen mit dem Schließringbolzen 18 und dem Greifbackengehäuse 5 in das Innere der Setzeinheit gezogen. Dadurch werden auch die beiden Bauteile 20, 21 aneinander gedrückt.

Diese Zugkraft führt nun dazu, dass der Schließring 9 in die Öffnung 8 des Mundstücks 7 eingezogen wird bzw. sich das Mundstück 7 über den Schließring 9 stülpt. Da der Außendurchmesser des Schließrings 9 größer ist als der Innendurchmesser der Öffnung 8 und das Mundstück 7 entsprechend stabil gefertigt ist, erfolgt dabei eine plastische Verformung des Schließrings 9, der dabei in die Rillen 23 des Schließringbolzens 18 fließt. Dadurch entsteht eine hochfeste, formschlüssige Verbindung zwischen dem Schließring 9 und dem Schließringbolzen 18.

Die Verformung des Schließrings 9 ist beendet, wenn die Stirnseite 15 des Mundstücks 7 am Kragen 25 des Schließrings 9 anliegt. Dies ist in Fig. 4 dargestellt. Durch das Anliegen des Mundstücks 7 am Kragen 25 des Schließrings 9 ist eine weitere Relativbewegung zwischen der Setzeinheit 2 und dem Schließring 9 bzw. dem Schließringbolzen 18 nicht mehr möglich, was zu einem Anstieg der Zugkraft führt, bis schließlich der Schließringbolzen 18 entlang der Sollbruchstelle 27 auseinandergerissen wird. Ein abgerissener Teil 30 des Schließringbolzens wird dabei weiterhin von den Greifbacken 6 festgehalten. In dem in Fig. 4 dargestellten Zustand befindet sich das Greifbackengehäuse 5 in seiner einen axialen Endposition, in der es eine maximale Entfernung zum Mundstück 7 einnimmt. Die Zugbewegung ist damit beendet. Bis zum Abriss des Schließringbolzens 18 standen während des gesamten Setzvorgangs die Zapfen 16 in Kontakt mit dem Greifbackengehäuse 5. Nach Abriss des Schließringbolzens 18 befindet sich das Greifbackengehäuse 5 in einem Abstand a zu den Zapfen 16. Der Abstand a entspricht dabei einem Abstand b zwischen dem abgerissenen Teil 30 und dem im Schließring 9 gehaltenen Teil des Schließringbolzens 18.

Das Greifbackengehäuse 5 wird nun beispielsweise durch Federkraft oder durch eine pneumatische Kraft oder auf andere Weise zurück in die in Fig. 2 dargestellte Ausgangsposition bewegt, also in Richtung zum Mundstück 7. Da der Abstand a zwischen dem Greifbackengehäuse 5 und den Zapfen 16 des Auswerfers 13 genauso groß ist wie der Abstand b zwischen dem abgerissenen Teil 30 und dem Schließringbolzen 18, kommt das Greifbackengehäuse 5 zum selben Zeitpunkt in Kontakt mit den Zapfen 16, wie der abgerissene Teil 30 des Schließringbolzens 18 mit dem Schließringbolzen 18. Die Rückstellbewegung des Greifbackengehäuses 5 kann so über den Auswerfer 13, insbesondere über dessen Zapfen 16 und dessen Fortsatz 14, direkt auf den Schließring 9 übertragen werden, ohne dass der abgerissene Teil 30 in den Greifbacken 6 verschoben werden muss. Der Schließring 9 wird also durch die Rückwärtsbewegung des Greifbackengehäuses 5, die über den Auswerfer 13 übertragen wird, aus dem Mundstück 7 herausgestoßen. Da die Länge des Fortsatzes 14 länger ist als die Tiefe der Öffnung 8, wird dabei sichergestellt, dass der Schließring 9 vollständig entfernt wird.

Kurz bevor das Greifbackengehäuse 5 seine axiale Endposition erreicht, in der eine weitere Bewegung des Auswerfers 13 in Richtung zur Öffnung 8 nicht möglich ist, gelangt der Fortsatz 11 des Öffnungselements 10 in Kontakt mit den Greifbacken 6 und verhindert, dass diese weiter mit dem Greifbackengehäuse 5 bewegt werden. So wird eine Relativbewegung zwischen den Greifbacken 6 und dem Greifbackengehäuse 5 hervorgerufen, die aufgrund der konischen Lagerung der Greifbacken 6 im Greifbackengehäuse 5 zu einer radialen Aufweitung der Greifbacken 6 führt. Dadurch wird der abgerissene Teil 30 des Schließringbolzens 18 von den Greifbacken freigegeben. Durch das Anlegen eines Vakuums an den Innenraum 24 kann der abgerissene Teil 30 leicht abgesaugt werden.

Die Setzeinheit 2 ist nun bereit für einen neuen Setzvorgang, wobei, da die Greifbacken 6 durch das Öffnungselement 10 weiterhin aufgehalten werden, ein leichtes Einführen eines neuen Schließringbolzens 18 möglich ist. Die Anpassung der Setzeinheit 2 an unterschiedliche Größen des Schließringbolzens und des Schließrings ist durch einen einfachen Austausch des Mundstücks 7, des Auswerfers 13 und des Öffnungselements 10 möglich. Da diese Elemente alle durch das Mundstück 7 im Gehäuse 4 gehalten werden, ist ein derartiger Wechsel auch schnell durchzuführen. Das Mundstück 7 ist bei diesem Ausführungsbeispiel über ein Gewinde mit dem Gehäuse 4 verbunden, aber auch andere Ausführungen sind denkbar.

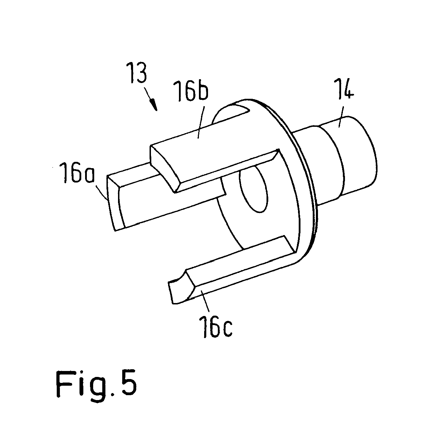

In Fig. 5 ist eine Detailansicht des Auswerfers 13 dargestellt. Der Auswerfer 13 weist drei kreisförmige Zapfen 16a, 16b, 16c auf, die zur Führung des Auswerfers 13 in den Ausnehmungen 17 des Öffnungselements 10 dienen. Entgegengesetzt von den Zapfen 16a, 16b, 16c erstreckt sich der hülsenförmige Fortsatz 14, der in die Öffnung 8 des Mundstücks 7 eingesetzt wird. Der freie Innendurchmesser des hülsenförmigen Fortsatzes 14 entspricht dabei in etwa dem Außendurchmesser des Schließringbolzens 18, wodurch eine Führung des Schließringbolzens 18 beim Einführen in die Setzeinheit 2 erfolgt.

## Patentansprüche

1. Setzeinheit zum Setzen von Schließringbolzen, die ein Gehäuse aufweist, das ein Greifbackengehäuse umgibt, in dem mindestens zwei Greifbacken angeordnet sind, wobei an einer Stirnseite des Gehäuses ein Mundstück mit einer Öffnung angeordnet ist, **dadurch gekennzeichnet, dass** sie ein Öffnungselement (10) aufweist, das eine axiale Bewegung der Greifbacken (6) in eine Richtung begrenzt, wobei das Greifbackengehäuse (5) weiter in diese Richtung bewegbar ist.

2. Setzeinheit nach Anspruch 1, **dadurch gekennzeichnet, dass** das Öffnungselement (10) mindestens einen Fortsatz (11) aufweist, der durch eine Öffnung (12) im Greifbackengehäuse (5) ragt.

3. Setzeinheit nach einem der Ansprüche 1 oder 2, **dadurch gekennzeichnet, dass** der Fortsatz (11) hülsenförmig ausgebildet ist und ein Schließringbolzen (18) durch die Öffnung (12) führbar ist.

4. Setzeinheit nach einem der Ansprüche 1 bis 3, **dadurch gekennzeichnet, dass** die Greifbacken (6) einen Innenraum (24) umgeben, wobei sie an ihrer Innenseite Halterillen (29) aufweisen.

5. Setzeinheit nach Anspruch 4, **dadurch gekennzeichnet, dass** sich der Innenraum (24) durch die Setzeinheit (2) fortsetzt.

6. Setzeinheit nach einem der Ansprüche 1 bis 5, **dadurch gekennzeichnet, dass** sie einen Auswerfer (13) aufweist, der zwischen dem Öffnungselement (10) und der Öffnung (8) des Mundstücks (7) angeordnet ist.

7. Setzeinheit nach Anspruch 6, **dadurch gekennzeichnet, dass** der Auswerfer (13) einen Fortsatz (14) aufweist, der sich in die Öffnung (8) des Mundstücks (7) erstreckt und eine Länge aufweist, die mindestens einer Tiefe der Öffnung (8) entspricht.

8. Setzeinheit nach Anspruch 7, **dadurch gekennzeichnet, dass** der Fortsatz (14) hülsenförmig und einstückig mit dem Auswerfer (13) ausgebildet ist.

9. Setzeinheit nach einem der Ansprüche 6 bis 8, **dadurch gekennzeichnet, dass** der Auswerfer (13) mindestens einen Zapfen (16) aufweist, der sich durch mindestens eine Ausnehmung (17) im Öffnungselement (10) in Richtung des Greifbackengehäuses (5) erstreckt.

10. Setzeinheit nach einem der Ansprüche 6 bis 9, **dadurch gekennzeichnet, dass** der Auswerfer (13) mehrere Zapfen (16) aufweist, die als Kreissegmente ausgebildet sind, wobei die Zapfen (16) einstückig mit dem Auswerfer (13) ausgebildet sind.

11. Setzeinheit nach einem der Ansprüche 1 bis 10, **dadurch gekennzeichnet, dass** die Zapfen (16) eine größere axiale Länge aufweisen als der Fortsatz (11) des Öffnungselements (10).
